# EUROPÄISCHE PATENTSCHRIFT

(11) **EP 0 774 823 B1**
(45) Veröffentlichungstag und Bekanntmachung des Hinweises auf die Patenterteilung: **15.03.2000**
(21) Anmeldenummer: 96810755.7
(22) Anmeldetag: 07.11.1996
(51) Int. Cl.: H02K 3/40

(54) **Leiterstab**
Conductor bar for electric machine
Barreau formé de conducteurs pour machine électrique

(30) Priorität: 18.11.1995 DE 19543122
(43) Veröffentlichungstag der Anmeldung: 21.05.1997
(73) Patentinhaber: ASEA BROWN BOVERI AG, 5400 Baden (CH)
(72) Erfinder: Baumann, Thomas, Dr., 5430 Wettingen (CH); Oesterheld, Jörg, Dr., 5442 Fislisbach (CH)
(74) Vertreter: Kaiser, Helmut, Dr.

(56) Entgegenhaltungen:
- EP-A- 0 036 911
- DE-A- 2 500 819
- DE-A- 2 755 050
- US-A- 4 403 163
- US-A- 4 853 565
- US-A- 5 066 881

## Beschreibung

### Technisches Gebiet

Die Erfindung bezieht sich auf einen Leiterstab für die Statorwicklung einer elektrischen Maschine, welcher Leiterstab aus miteinander verroebelten und gegeneinander elektrisch isolierten Teilleitern besteht, die auf ihrer gesamten Länge von einer gemeinsamen Hauptisolation umgeben sind, wobei an beiden Stabschmalseiten die durch die Verroebelung bedingten Hohlräume zwischen den Teilleitern und der Hauptisolation durch eine elektrisch halbleitende Masse ausgefüllt sind, die ihrerseits durch eine elektrisch halbleitende Schicht oder Streifen abgedeckt ist.

Die Erfindung geht dabei aus von einem Stand der Technik, wie er sich beispielsweise aus der US-PS 5,066,881 ergibt.

### Technologischer Hintergrund und Stand der Technik

Leiterstäbe für die Statorwicklung einer elektrischen Maschine bestehen bei grösseren Einheiten aus miteinander verroebelten und gegeneinander elektrisch isolierten Teilleitern. Diese sind in ihrer gesamten Länge von einer gemeinsamen Hauptisolation umgeben, die sich über beide Wickelkopf- oder Stirnbügelabschnitte und den Eisenabschnitt des Stators erstreckt. Durch die Verroebelung der Teilleiter entstehen an den Schmalseiten des Leiterbündels Hohlräume zwischen den Teilleitern und der Hauptisolation. Diese werden normalerweise mit einer elektrisch halbleitenden Masse ausgefüllt und sind ihrerseits durch eine elektrisch halbleitende Schicht oder einen entsprechenden Streifen abgedeckt.

Der Kantenradius eines Roebelstabes ist im Normalfall durch den Kantenradius der Teilleiter gegeben und liegt im geradeverlaufenden Nutteil üblicherweise bei 0,5 mm. Bei scherenden Pressungen, wie sie in den Biegungen des Wickelkopfabschnitts angewandt werden, kann dieser Kantenradius deutlich kleiner als 0,5 mm werden. Gegenüber der Flachseite des Stabes ist das elektrische Feld an der Kante mit einem Kantenradius von 0,5 mm 3- bis 4-fach überhöht. Aus diesem Grund haben praktisch alle elektrischen Durchschläge beim Prüfen von Roebelstäben ihren Ursprung im Kantenbereich. Bei Betriebsspannung wird ein Durchschlagen verhindert durch eine grosszügige Dimensionierung der Dicke der Hauptisolation. Dies wiederum hat zur Folge, dass die Isolationsdicke auf den Flachseiten dicker als elektrisch notwendig ist, was sich bei indirekt gekühlten Statorwicklungen nachteilig auf die Wärmeabfuhr auswirkt. Es besteht deshalb ein grosses Bedürfnis, die Dicke der Hauptisolation zu vermindern, und zwar sowohl im (geraden) Nutteil als auch im vergleichsweise kompliziert gebogenen Wickelkopfteil des Leiterstabes, weil in letzterem der Wärmetausch nur über das durch den Wickelkopf strömende Kühlgas, zumeist Luft, erfolgt.

Um die besagten Spannungsüberhöhungen an den Stabkanten auf ein vertretbares Mass zu senken, müssten die Kantenradien auf Werte grösser 1,5 mm erhöht werden. Dies ist nur durch eine zusätzliche Bearbeitung des "grünen", d.h. noch nicht mit der Hauptisolation versehenen Leiterstabes zu bewerkstelligen.

Bei der aus der US-PS 5,066,881 bekannten elektrischen Maschine ist zwecks Schaffung einer ebenen Oberfläche das aus miteinander verroebelten Teilleitern aufgebaute Leiterbündel an seinen Schmalseiten mit Füllmaterial versehen, um die durch die Verroebelung entstandenen Hohlräume zwischen den Teilleitern und der Hauptisolation auszufüllen. Diese Zwischenschicht aus Füllmaterial ist an den Kanten abgerundet. Dieses Füllmaterial ist mit einer textilen, aus Glasfasern und pyrolisierten organischen Kohlenstoffverbindungen bestehenden Schicht abgedeckt, die sich um die abgerundeten Kanten der Füllmaterialschicht bis zu den obersten bzw. untersten Teilleitern des Leiterbündels erstreckt und eine elektrische Ankopplung der besagten Teilleiter an die Hauptisolation bewirkt. Diese textile Schicht weist eine Flächenleitfähigkeit zwischen 200 Ohm und 10 MOhm pro Flächeneinheit auf. Über Verrundungsradien ist der US-PS 5,066,881 nichts zu entnehmen, ebenso sind dort keine Aussagen Über die Zusammensetzung des Füllmaterials und seine Applikation oder auch die Abrundung gemacht. Es kann aber davon ausgegangen werden, dass der Verrundungsradius in einem Bereich liegt, der die oben erwähnte Spannungsüberhöhung vermindert. Nachteilig erscheint es aber, dass sich durch die bekannte Vorgehensweise nur schwerlich eine ebene Oberfläche an den Stabschmalseiten erreicht lässt. Auch dürfte das Formen und/oder die nachträgliche Bearbeitung der Füllschicht zum Zwecke einer definierten und überall gleichmässigen Abrundung der Stabkanten eher kompliziert und aufwendig sein.

### Kurze Darstellung der Erfindung

Der Erfindung liegt die Aufgabe zugrunde, einen Leiterstab der eingangs genannten Gattung zu schaffen, der eine ebene Oberfläche der beiden Stabschmalseiten aufweist, und bei dem das Anbringen einer Abrundung an den Kanten des Leiterbündels mit einfachen Mitteln möglich ist.

Diese Aufgabe wird erfindungsgemäss dadurch gelöst, dass der elektrisch halbleitende Streifen aus einem faserverstärkten Kunststoff besteht, der im Wickelkopfabschnitt des Leiterstabes quer zu seiner Längsrichtung abwechselnd Einschnitte aufweist, die tiefer sind als die halbe Streifenbreite, mit einer Schnittbreite, die in der Grössenordnung der Streifendicke liegt, und die Breite des Streifens um 1 bis 4 mm kleiner ist als die Breite des Leiterbündels.

Eine derartiger Leitstreifen deckt die Schmalseite des Leiterbündels perfekt ab und weist eine ebene und praktisch glatte Oberfläche auf. Durch die Einschnitte ist er in Grenzen lateral biegbar und kann auf diese Weise den Krümmungen der Leiterstäbe im Wickelkopfteil ohne grosse Rückstellkräfte und/oder Verwerfungen angepasst werden. Er kann mit einfachen Mitteln auf das im Montagezustand weiche Füllmaterial gepresst werden, wodurch auch alle Hohlräume zwischen den obersten bzw. untersten Teilleitern und dem Leitstreifen vermieden werden. Das Pressen kann im einfachsten Fall durch Umwickeln mit einem in der Wärme schrumpfenden Band und nachfolgendes Erwärmen des grünen Stabes erfolgen, wobei vorzugsweise Trennfolien oder Trennbänder, die gleichfalls in der Wärme schrumpfen, zwischengeschaltet werden.

Der Leitstreifen kann - muss aber nicht - vorgängig an seinen Längskanten abgerundet werden. Es hat sich aber als zweckmässig erwiesen, die Abrundung erst nach dem Aufbringen des Leitstreifens vorzunehmen. Dies kann beispielsweise mit einer elektrisch oder pneumatisch angetriebenen Handwerkzeug, z.B. Handfräser, erfolgen. Die durch den Leitstreifen erzielt glatte Oberfläche der Leiterbündelschmalseite dient gleichzeitig als definierte Höhenführung für das Fräswerkzeug. Vorteilhaft ist es ferner, die Breite des Leitstreifens um 1 bis 2 mm kleiner zu machen als die Breite des Leiterbündels, so dass sich durch das beim Pressen austretende Füllmaterial bereits eine Vorformung der Kante ergibt.

Ausführungsbeispiele der Erfindung sowie die damit erzielbaren Vorteile werden nachfolgend anhand der Zeichnung näher erläutert.

### Kurze Beschreibung der Zeichnung

In der Zeichnung sind Ausführungsbeispiele der Erfindung schematisch dargestellt, und zwar zeigt:
- Fig.1: eine schematisierte Draufsicht auf den Wickelkopfabschnitt eines Leiterstabes;
- Fig.2: eine Draufsicht auf einen Leitstreifen, wie er für den leicht gekrümmten Abschnitt des Wickelkopfes verwendet wird;
- Fig.3: eine Draufsicht auf einen Leitstreifen für den Nutaustritt;
- Fig.4: einen Querschnitt durch ein aus Teilleitern bestehendes Leiterbündel;
- Fig.5: einen Querschnitt durch das Leiterbündel nach Fig.4 mit Füllmaterial und Leitstreifen an beiden Bündelschmalseiten;
- Fig.6: einen Querschnitt durch das Leiterbündel nach Fig.5, das zwecks Pressung und Verfestigung mit Trenn- und Schrumpffolien versehen ist;
- Fig.7: das Detail X aus Fig.6 mit einen vergrösserten Querschnitt des Kantenbereichs des Leiterbündels nach Fig.6;
- Fig.8: einen Querschnitt durch das Leiterbündel nach Fig.6 nach Entfernen der Folien und Abrunden der Kanten; und
- Fig.9: einen Querschnitt durch den fertigen, mit der Hauptisolation versehenen Leiterstab.

### Wege zur Ausführung der Erfindung

Der Statorwicklungsstab einer grossen elektrischen Maschine, z.B. eines Turbogenerators, umfasst in wesentlichen vier Abschnitte: einen Nut- oder Eisenteil A, einen vergleichsweise stark gekrümmten Abschnitt B hinter dem Austritt aus dem Statorblechkörper 1, einen weniger gekrümmten, bis 150 cm und mehr langen Abschnitt C, an den sich wiederum ein stark gekrümmter Endabschnitt D anschliesst, wo die Weiterschaltung der Stäbe erfolgt.

Bei der Herstellung der Leiterstäbe ist es von grosser Bedeutung, dass alle Leiterstabflächen möglichst eben sind. Dies gilt insbesondere für elektrische Maschinen mit indirekt gekühlter Statorwicklung. Bei diesen Maschinentypen erfolgt die Wärmeabfuhr aus dem Leiterstab durch den mit radialen und/oder axialen Kühlkanälen versehenen Statorblechkörper. Im Nutteil A an den Stabbreitseiten schon allein deshalb, um einen guten Wärmeübergang zu sichern, an den Stabschmalseiten, um eine optimale Verkeilung des Stabes in der Nut zu ermöglichen. Auch im Wickelkopfteil sind möglichst ebene und glatte Staboberflächen anzustreben. Dabei steht weniger die Kühlwirkung im Vordergrund. Glatte und ebene Leiterstaboberflächen vereinfachen jedoch den Einbau der Abstütz- und Versteifungselemente im Wickelkopf. Für alle Stababschnitte gilt, die Dicke der Hauptisolation möglichst gering zu machen, was neben dem Kupferfüllfaktor im Eisenteil insgesamt die Herstellungskosten der Leiterstäbe erniedrigt.

Hier setzt nun die Erfindung ein. Mit der im nachstehenden beschriebenen Erfindung ist es möglich, neben der Verkleinerung der Dicke der Hauptisolation auch ebene und glatte Staboberflächen zu erzielen, ohne die elektrischen Eigenschaften der Isolierung negativ zu beeinflussen.

Wesentliches Element der Erfindung ist dabei ein speziell gestalteter Leitstreifen 2 von typisch 1 mm Dicke aus elektrisch halbleitendem Hartglasgewebe (HGW). Derartige HGW bestehen normalerweise aus glasfaserverstärktem Kunststoff (GFK), wobei der Kunststoff, z.B. Epoxidharz, durch Zusätze wie Russ oder Graphit elektrisch halbleitend gemacht wurde. Anstelle von Glasfasern können auch Kohlefasern verwenden werden (CFK). Diese Leitstreifen 2 werden, wie später noch näher beschrieben wird, zwischen der aus verroebelten Teilleitern 3 aufgebauten Leiterbündel und der Hauptisolation (8) angeordnet. Im Eisenteil A sind diese Leitstreifen einfache Platten mit einer Breite, die um 1 bis 2 mm kleiner ist als die Breite des Leiterbündels.

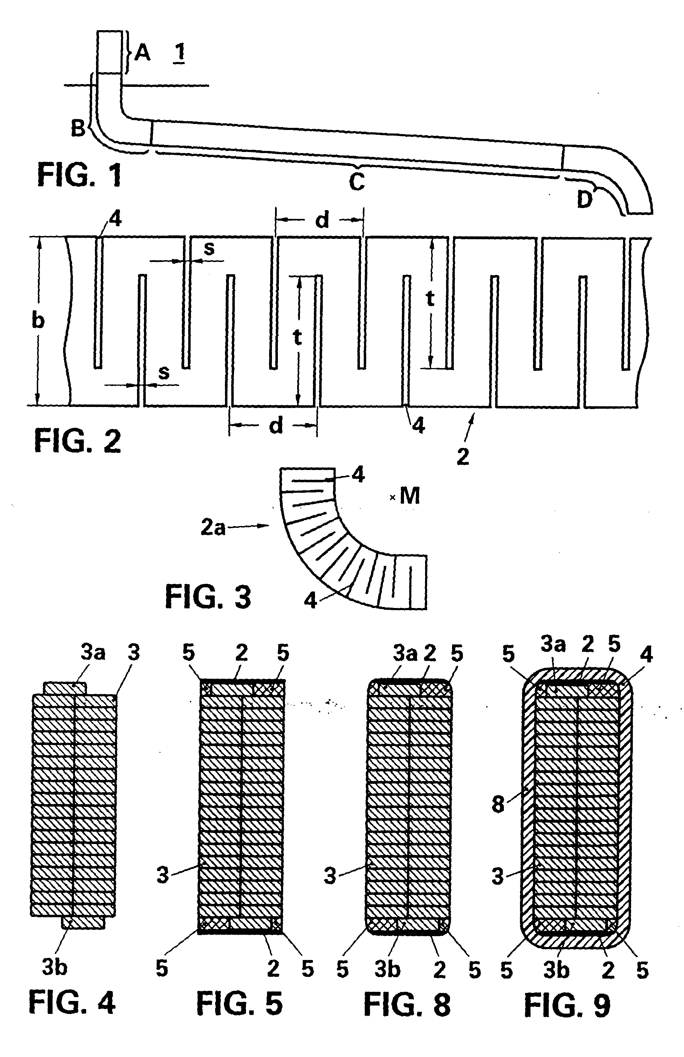

Im Wickelkopf hingegen, also in den Abschnitten B, C und gegebenenfalls D, weist der Leitstreifen 2 quer zu seiner Längsrichtung abwechselnd Einschnitte 4 auf, mit einer Tiefe t, die grösser ist als die halbe Streifenbreite b. Die Schnittbreite s liegt dabei typisch in der Grössenordnung der Streifendicke (≈ 1 mm) (vgl. Fig.2). Der Abstand der abwechselnd von beiden Seiten eingebrachten Einschnitte 4 richtet sich dabei nach der gewünschten lateralen Krümmung. Für den vergleichsweise wenig gekrümmten Abschnitt C des Stabes hat sich ein Abstand d zwischen zwei Einschnitten 4 einer Streifenseite von 10 bis 20 mm als ausreichend erwiesen, wobei die Tiefe t zwischen 60 und 80% der Streifenbreite b beträgt.

Bei einem 50 mm breiten Leitstreifen 2 mit derart gestalteten Einschnitten 4 lässt sich dann, wie einfache mathematische Beziehungen ergeben, der ansonsten lateral steife Leitstreifen auf einer Distanz 2d um mehrere Winkelgrade lateral biegen.

Im stark gekrümmten Abschnitt B tritt an die Stelle eines langgestreckten Leitstreifens 2 ein der Geometrie dieses Abschnitts angepasstes Formstück 2a aus demselben Material wie der Leitstreifen 2, wie es in Fig.3 veranschaulicht ist. Dieses Formstück 2a weist analog zum Leitstreifen 2 abwechselnd von beiden Seiten Einschnitte 4 auf, die etwa in Richtung des Mittelpunkt M des Krümmungskreises weisen und zwischen 60 und 80% der Formstückbreite tief sind.

Im Oesenabschnitt D des Leiterstabes kann u.U. auf die Anbringung eines Formstücks 2a verzichtet werden, wenn gesichert ist, dass die Potentialtrennung bis zu diesem Bereich vollständig abgeschlossen ist, zwischen Leiterbündel und Isolationsoberfläche der Hauptisolation 8 also nur ein geringer Potentialunterschied auftritt.

Anhand der Fig.4 bis 9 soll nun nachstehend die Herstellung eines erfindungsgemässen Leiterstabes skizziert werden.

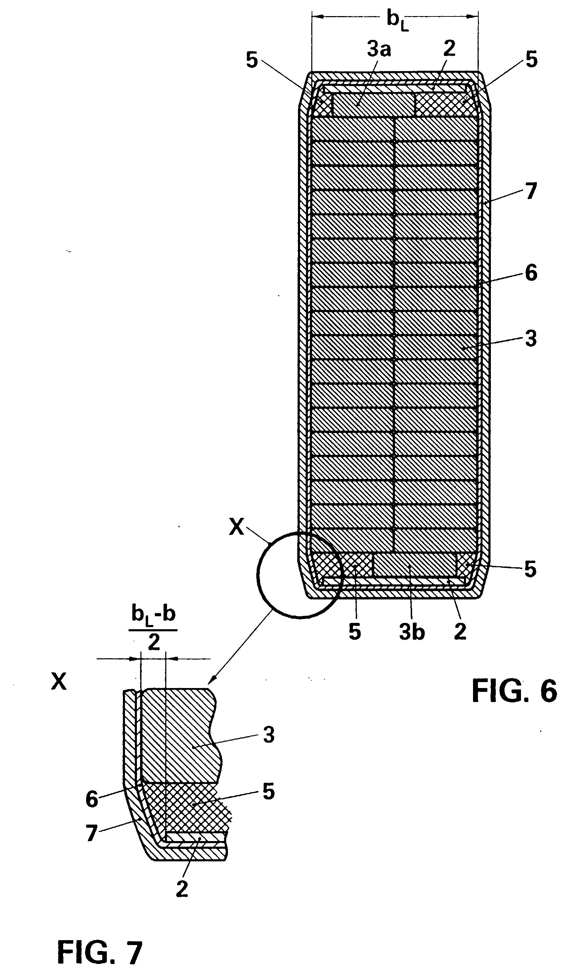

Ausgehend von einem aus gegeneinander isolierten und miteinander verroebelten Teilleitern 3 bestehenden Leiterbündel (Fig.4) werden die neben den äussersten Teilleitern 3a, 3b an der oberen und unteren Schmalseite des Bündels befindlichen Leerstellen mit einem elektrisch halbleitenden Füllmaterial 5, z.B. einem Leitkitt, versehen und anschliessend mit dem Leitstreifen 2 bzw. Formstück 2a abgedeckt. Die Breite b des Leitstreifens 2 bzw. Formstücks 2a ist dabei vorzugsweise um 1 bis 2 mm kleiner als die Breite b_{L} des Leiterbündels (vgl. Fig.7). Um dieses Bündel wird unter Zwischenschaltung einer Trennfolie 6 ein Schrumpfband 7 gewickelt und einer Wärmebehandlung bei erhöhter Temperatur (120° - 150°C) unterzogen. Dabei wird der Leitkitt 5 in alle noch vorhandene Hohlräume gedrückt und verfestigt. Dabei erfolgt gleichzeitig eine Vorformung der Kanten, wie sie in Fig.7 vereinfacht dargestellt ist. Zur Unterstützung des Pressvorganges kann dabei auch Trennfolie aus in Bündelumfangsrichtung schrumpfender Schrumpffolie verwendet werden. Vorteilhaft ist es ferner, wenn die nach aussen gerichteten Längskanten des Leitstreifens 2 und des Formstücks 2a abgerundete oder zumindest gebrochene Kanten aufweisen. Dies fördert das Zusammenpressen des Bündels beim Schrumpfen und bringt auch eine gewissen Vorformung der (später anzubringenden) Verrundung.

Nach dem Aushärten des Leitkitts 5 wird die Bandage 6,7 wieder entfernt, und es werden die Kanten des Leiterbündels mit einem Handwerkzeug, z.B. einem pneumatisch angetriebenen Handfräser, auf einen Kantenradius von 2,5 ±0,5 mm abgerundet. Bei diesem Abrunden ist es zwar kaum zu vermeiden, dass die äussersten Teilleiter 3a, 3b lokal mitangefräst werden. Doch ist diese Materialabtragung so gering, dass nur ein unwesentlich kleiner Teil des Teilleiterquerschnitts betroffen ist, so dass der Stromfluss durch diesen Leiter praktisch nicht beeinträchtigt wird. Das Anfräsen der Teilleiter 3a, 3b kann sogar erwünscht sein, weil auf diese Weise eine resistive (nicht kapazitive) elektrische Ankopplung dieser Teilleiter an den Leitstreifen bewirkt wird. Dass bei diesem Vorgang auch die Teilleiterisolation lokal beschädigt wird, ist unbedenklich, weil diese "blanken" Stellen sich unmittelbar an die später anzubringende Hauptisolation 8 anschliessen. Auf diese Weise entsteht ein "grüner" Stab, wie er in Fig.8 im Querschnitt dargestellt ist, der anschliessend in bekannter Weise mit der Hauptisolation 8 versehen wird (vgl. Fig.9).

### BEZEICHNUNGSLISTE

- 1: Statorblechkörper
- 2,2a: Leitstreifen
- 3: Teilleiter
- 4: Einschnitte in 2, 2a
- 5: Füllmaterial (Leitkitt)
- 6: Trennfolie
- 7: Schrumpfband
- 8: Hauptisolation

- b: Breite des Leitstreifens 2
- b_{L}: Breite des Leiterbündels
- d: Abstand zwischen zwei Einschnitten 4 auf einer Seite
- s: Schnittbreite
- t: Schnitttiefe

- A: Eisenteil des Leiterstabes
- B: stark gekrümmter Abschnitt nach A
- C: wenig gekrümmter Abschnitt zwischen B und D
- D: Oesenteil des Leiterstabes

## Patentansprüche

1. Leiterstab für die Statorwicklung einer elektrischen Maschine, welcher Leiterstab aus miteinander verroebelten und gegeneinander elektrisch isolierten Teilleitern (3, 3a, 3b) besteht, die auf ihrer gesamten Länge von einer gemeinsamen Hauptisolation (8) umgeben sind, wobei an beiden Stabschmalseiten die durch die Verroebelung bedingten Hohlräume zwischen den Teilleitern und der Hauptisolation durch eine elektrisch halbleitende Masse (5) ausgefüllt sind, die ihrerseits durch elektrische halbleitende Streifen (2, 2a) abgedeckt ist,
dadurch gekennzeichnet, dass
der elektrisch halbleitende Streifen (2, 2a) aus einem faserverstärkten Kunststoff besteht, der im Wickelkopfabschnitt (B, C) des Leiterstabes quer zu seiner Längsrichtung abwechselnd Einschnitte (4) aufweist, die tiefer sind als die halbe Streifenbreite (b), mit einer Schnittbreite (s), die in der Grössenordnung der Streifendicke liegt, und
die Breite des Streifens (2, 2a) um 1 bis 4 mm kleiner ist, als die Breite (b_{L}) des Leiterbündels.

2. Leiterstab nach Anspruch 1, dadurch gekennzeichnet, dass
der elektrisch halbleitende Streifen mehrteilig ausgebildet ist und im stark gekrümmten Abschnitt (B) des Stabes aus einem grob der Geometrie dieses Abschnitts (B) angepassten Formstück (2a) besteht.

3. Leiterstab nach Anspruch 1 oder 2, dadurch gekennzeichnet, dass
die Tiefe (t) der Einschnitte (4) zwischen 60 und 80% der Streifenbreite und der Abstand zwischen zwei benachbarten Einschnitten (4) auf einer Seite zwischen 10 und 20 mm beträgt.

4. Leiterstab nach einem der Ansprüche 1 bis 3, dadurch gekennzeichnet, dass
die äusseren Kanten des Streifens (2a, 2b) und gegebenenfalls die darunterliegende Füllmaterialschicht (5) abgerundet sind, wobei der Kantenradius zwischen 2 und 3 mm beträgt.

## Claims

1. Conductor bar for the stator winding of an electrical machine, which conductor bar is composed of conductor elements (3, 3a, 3b) which are transposed with one another, are electrically insulated from one another and are surrounded over their entire length by common main insulation (8), the cavities which are caused by the transposition between the conductor elements and the main insulation being filled on both bar narrow sides by an electrically semiconductive compound (5) which, for its part, is covered by electrically semiconductive strips (2, 2a), characterized in that the electrically semiconductive strip (2, 2a) is composed of fibre-reinforced plastic, which has incisions (4) alternately in the winding overhang section (B, C) of the conductor bar, transversely with respect to its longitudinal direction, which incisions (4) are deeper than half the strip width (b), having a cut width (s) which is in the order of magnitude of the strip thickness, and the width of the strip (2, 2a) is 1 to 4 mm smaller than the width (b_{L}) of the conductor bundle.

2. Conductor bar according to Claim 1, characterized in that the electrically semiconductive strip is designed in a plurality of parts and, in the highly curved section (B) of the bar, comprises a moulding (2a) which is roughly matched to the geometry of this section (B).

3. Conductor bar according to Claim 1 or 2, characterized in that the depth (t) of the incisions (4) is between 60 and 80% of the strip width, and the distance between two adjacent incisions (4) on one side is between 10 and 20 mm.

4. Conductor bar as according to one of Claims 1 to 3, characterized in that the outer edges of the strip (2, 2a) and, if required, the filling material layer (5) underneath it are rounded, the edge radius being between 2 and 3 mm.

## Revendications

1. Barre de conducteurs pour l'enroulement du stator d'une machine électrique, laquelle barre de conducteurs est constituée de sous-conducteurs (3, 3a, 3b) transposés l'un avec l'autre et électriquement isolés l'un de l'autre, qui sont entourés sur toute leur longueur d'une isolation principale (8) commune, les espaces vides entre les sous-conducteurs et l'isolation principale déterminés par la transposition sur les deux petits côtés de la barre, étant remplis par une masse semi-conductrice de l'électricité (5), qui est couverte de son côté par des bandes semiconductrices de l'électricité (2,2a),
caractérisée en ce que
la bande semi-conductrice de l'électricité (2, 2a) est constituée d'une matière plastique renforcée par fibres, qui présente dans le segment de la tête d'enroulement (B, C) de la barre de conducteurs à la transversale de son sens longitudinal, des encoches (4) alternantes, qui sont plus profondes que la moitié de la largeur de la bande (b), avec une largeur de coupe (s), qui se situe dans l'ordre de grandeur de l'épaisseur de la bande, et
la largeur de la bande (2, 2a) est plus petite de 1 à 4 mm que la largeur (B_{L}) du faisceau de conducteurs.

2. Barre de conducteurs suivant la revendication 1, caractérisée en ce que la bande semi-conductrice de l'électricité est conçue en plusieurs parties et est constituée dans le segment fortement courbé (B) de la barre d'une pièce moulée (2a) grossièrement adaptée à la géométrie de ce segment (B).

3. Barre de conducteurs suivant la revendication 1 ou 2, caractérisée en ce que la profondeur (t) des encoches (4) s'élève entre 60 et 80% de la largeur de la bande et la distance entre deux encoches (4) voisines sur un côté s'élève entre 10 et 20 mm.

4. Barre de conducteurs suivant l'une des revendications 1 à 3, caractérisée en ce que
les arêtes extérieures de la bande (2a, 2b) et, le cas échéant, la couche de matériau de remplissage (5) sous-jacente sont arrondies, le rayon des arêtes s'élevant dans ce cas entre 2 et 3 mm.
